# EUROPEAN PATENT APPLICATION

(11) **EP 4 840 715 A2**
(43) Date of publication of application: **18.11.2026**
(21) Application number: 26200292.6
(22) Date of filing: 12.12.2024
(51) Int. Cl.: B60W 30/14

(54) **DRIVING SUPPORT DEVICE**

(30) Priority: 21.12.2023 JP 2023216104
(62) Document number(s) of the earlier application(s) in accordance with Art. 76 EPC: 24219297.9 / 4 578 752
(71) Applicant: Toyota Jidosha Kabushiki Kaisha, Toyota-shi, Aichi-ken 471-8571 (JP)
(72) Inventor: IKEZAWA, Yuta, TOYOTA-SHI, AICHI-KEN, 471-8571 (JP)
(74) Representative: Cabinet Beau de Loménie

(57) **Abstract**

To optimize deceleration support to match a rate expected by a driver, provided is a driving support device including: an intersection recognition module (100) which recognizes an intersection in front of a vehicle (VH) in a traveling direction; a left/right turn prediction module (110) which predicts whether the vehicle (VH) is to turn left or right at the intersection recognized by the intersection recognition module (100); a deceleration control module (120, 130, 140) which performs, when the left/right turn prediction module (100) predicts that the vehicle (VH) is to turn left or right, deceleration control of decelerating the vehicle (VH) to a target vehicle speed (Vt) before the vehicle (VH) reaches a target position (Pt); and an external information acquisition module (40, 60, 70, 80) which acquires information on an oncoming vehicle, information on a pedestrian, and/or information on a traffic light color. The deceleration control module (120, 130, 140) sets the target vehicle speed and/or a start timing for starting the deceleration control based on the information acquired by the external information acquisition module (40, 60, 70, 80).

## Description

### BACKGROUND OF THE INVENTION

### 1. Field of the Invention

The present disclosure relates to a driving support device, and more particularly, to a technology suitable for deceleration support of a vehicle.

### 2. Description of the Related Art

For example, in Japanese Patent Application Laid-open No. 2013-199241, there is disclosed a device which performs, when a vehicle is to make a left or right turn and travel through an intersection, deceleration support for decelerating the vehicle to a target vehicle speed before the vehicle reaches a deceleration target point, and which sets the deceleration target point closer when the vehicle is predicted to turn left than when the vehicle is predicted to turn right.

The vehicle speed expected by a driver for deceleration support varies depending on the presence or absence of an oncoming vehicle or a pedestrian crossing the road when the vehicle turns left or right at an intersection, or the timing at which a traffic light color changes. Therefore, changing only the deceleration target point based on whether or not the vehicle is to turn left or right at an intersection, as in the device as described in Japanese Patent Application Laid-open No. 2013-199241, may result in the deceleration of the vehicle by the deceleration support being too high or too low relative to the rate expected by the driver. In other words, there is room for improvement in optimizing deceleration support to match the rate expected by the driver.

### SUMMARY OF THE INVENTION

The technology of the present disclosure has been made in view of the circumstances described above, and has an object to optimize deceleration support to match a rate expected by a driver.

According to at least one embodiment of the present disclosure, there is provided a driving support device including: an intersection recognition module configured to recognize an intersection in front of a vehicle in a traveling direction; a left/right turn prediction module configured to predict whether the vehicle is to turn left or right at the intersection recognized by the intersection recognition module; a deceleration control module configured to perform, when the left/right turn prediction module predicts that the vehicle is to turn left or right at the intersection, deceleration control of decelerating the vehicle to a predetermined target vehicle speed before the vehicle reaches a predetermined target position; and an external information acquisition module configured to acquire information on an oncoming vehicle and/or information on a pedestrian and/or information on a traffic light color of the intersection. The deceleration control module is configured to set the predetermined target vehicle speed and/or a start timing for starting the deceleration control based on the information acquired by the external information acquisition module.

### BRIEF DESCRIPTION OF THE DRAWINGS

FIG. 1 is a schematic diagram for illustrating a hardware configuration of a vehicle in at least one embodiment of the present disclosure.
FIG. 2A is a schematic diagram for illustrating a software configuration of a control device in the at least one embodiment.
FIG. 2B is a schematic diagram for illustrating deceleration control in the at least one embodiment.
FIG. 2C is a schematic graph for showing a deceleration rate setting map in the at least one embodiment.
FIG. 3A, FIG. 3B, and FIG. 3C are schematic diagrams each for illustrating a specific example of processing of changing a target vehicle speed in the at least one embodiment.
FIG. 4 is a flowchart for illustrating a processing routine of deceleration support in the at least one embodiment.
FIG. 5 is a schematic diagram for illustrating a modification example of the present disclosure.

### DESCRIPTION OF THE EMBODIMENTS

Description is now given of a driving support device according to at least one embodiment of the present disclosure with reference to the drawings.

### [Hardware Configuration]

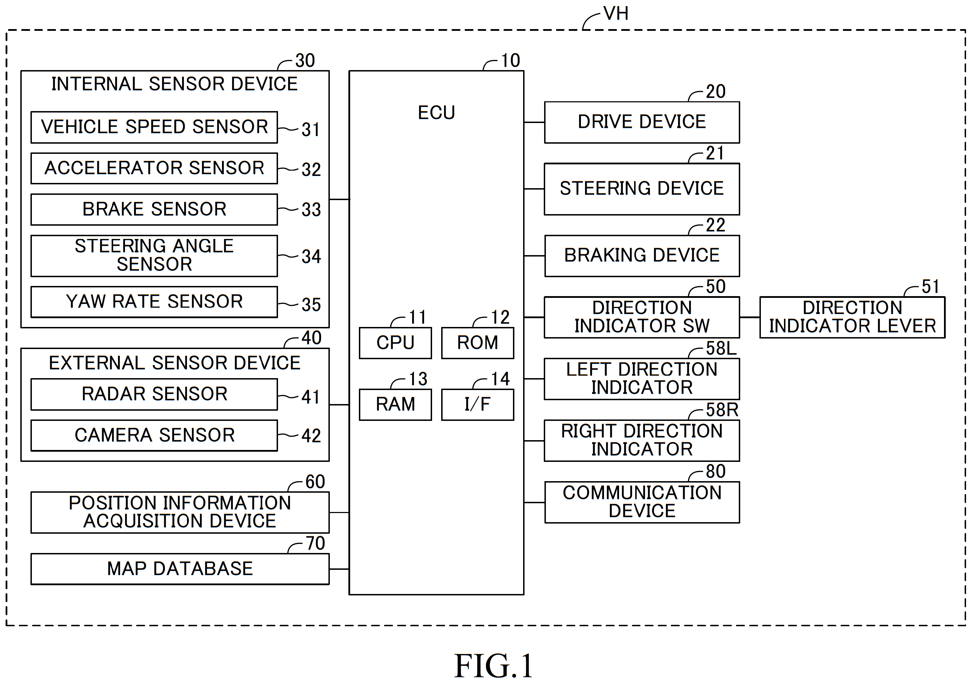

FIG. 1 is a schematic diagram for illustrating a hardware configuration of a vehicle VH in the at least one embodiment. The vehicle VH is hereinafter sometimes referred to as "own vehicle" when the vehicle VH is required to be distinguished from other vehicles or the like.

The vehicle VH includes an electronic control unit (ECU) 10. The ECU 10 includes a central processing unit (CPU) 11, a read only memory (ROM) 12, a random access memory (RAM) 13, an interface device 14, and the like. The CPU 11 is a processor which executes various programs stored in the ROM 12. The ROM 12 is a nonvolatile memory, and stores data and the like required for the CPU 11 to execute the various programs. The RAM 13 is a volatile memory, and provides a work area in which the various programs are loaded when the various programs are to be executed by the CPU 11. The interface device 14 is a communication device for communicating to and from an external device.

The ECU 10 is a central device which performs driving support such as deceleration support. Driving support is a concept including autonomous driving. To the ECU 10, a drive device 20, a steering device 21, a braking device 22, an internal sensor device 30, an external sensor device 40, a direction indicator switch 50, direction indicators 58L and 58R, a position information acquisition device 60, a map database 70, a communication device 80, and the like are connected for communication.

The drive device 20 generates a driving force to be transmitted to driving wheels of the vehicle VH. As the drive device 20, for example, an electric motor and an engine are given. In a driving support device of the at least one embodiment, the vehicle VH may be any one of a hybrid electric vehicle (HEV), a plug-in hybrid electric vehicle (PHEV), a fuel cell electric vehicle (FCEV), a battery electric vehicle (BEV), and an engine vehicle. The steering device 21 applies a turning force to the wheels of the vehicle VH. The braking device 22 applies a braking force to the wheels of the vehicle VH.

The internal sensor device 30 is sensors which detect states of the vehicle VH. The internal sensor device 30 specifically includes a vehicle speed sensor 31, an accelerator sensor 32, a brake sensor 33, a steering angle sensor 34, a yaw rate sensor 35, and the like.

The vehicle speed sensor 31 detects a travel speed of the vehicle VH (hereinafter referred to as "vehicle speed"). The accelerator sensor 32 detects an operation amount of an accelerator pedal (not shown) by a driver. The brake sensor 33 detects an operation amount of a brake pedal (not shown) by the driver. The steering angle sensor 34 detects a rotation angle, that is, a steering angle of a steering wheel or a steering shaft (not shown) of the vehicle VH. The yaw rate sensor 35 detects a yaw rate of the vehicle VH. The internal sensor device 30 transmits, at a predetermined cycle, a state of the vehicle VH detected by each of the sensors 31 to 35 to the ECU 10.

The external sensor device 40 is sensors which recognize target object information relating to a target object in the periphery of the vehicle VH. Specifically, the external sensor device 40 includes a radar sensor 41, a camera sensor 42, and the like. The target object information may be, for example, information relating to peripheral vehicles, pedestrians, traffic lights, road white lines, road signs, and the like.

The radar sensor 41 detects a target object present in the periphery of the vehicle VH. The radar sensor 41 includes a millimeter wave radar and/or a LiDAR sensor. The millimeter wave radar emits radio waves (millimeter waves) in the millimeter wave band and receives millimeter waves (reflected waves) reflected by a target object present within the radiation range. The millimeter wave radar acquires, for example, a relative distance between the vehicle VH and the target object and a relative speed between the vehicle VH and the target object based on, for example, a phase difference between the transmitted millimeter waves and the received reflected waves, an attenuation level of the reflected waves, and the time from transmitting the millimeter waves to receiving the reflected waves. The LiDAR sensor sequentially scans pulsed laser light having a wavelength shorter than that of millimeter waves in a plurality of directions, and receives the reflected light reflected by a target object, and based on that, acquires, for example, a shape of a target object detected in front of the vehicle VH, the relative distance between the vehicle VH and the target object, and a relative speed between the vehicle VH and the target object.

The camera sensor 42 acquires target object information on the periphery of the vehicle VH by capturing the periphery of the vehicle VH and processing image data obtained by capturing the periphery. For example, a digital camera including an image pickup element such as a CMOS device or a CCD can be used as the camera sensor 42. The target object information is information representing the type of the target object detected in the periphery of the vehicle VH, the relative distance between the vehicle VH and the target object, the relative speed between the vehicle VH and the target object, and the like. The type of the target object may be recognized by, for example, machine learning such as pattern matching.

The external sensor device 40 repeatedly transmits the acquired target object information to the ECU 10 each time a predetermined time elapses. The ECU 10 determines the relative relationship between the vehicle VH and the target object by combining the relative relationship between the vehicle VH and the target object obtained by the radar sensor 41 with the relative relationship between the vehicle VH and the target object obtained by the camera sensor 42. However, the external sensor device 40 is not required to include both the radar sensor 41 and the camera sensor 42, and may include only the camera sensor 42, for example.

A direction indicator lever 51 is an operating device which the driver uses to cause the left and right direction indicators 58L and 58R to blink. The direction indicator switch 50 detects the direction in which the direction indicator lever 51 is operated by the driver. When the driver operates the direction indicator lever 51, the direction indicator switch 50 transmits a blinking instruction signal corresponding to the direction of the operation to the ECU 10. When the ECU 10 receives the blinking instruction signal, the ECU 10 causes the direction indicator 58L or 58R corresponding to the direction of the operation of the direction indicator lever 51 to blink.

The position information acquisition device 60 acquires information on the current position of the vehicle VH. As the position information acquisition device 60, for example, a global positioning system (GPS) or a global navigation satellite system (GNSS), for example, included in a navigation system (not shown) can be used. The position information acquisition device 60 transmits the acquired information on the current position of the vehicle VH to the ECU 10 at a predetermined cycle. In addition, the position information on the vehicle VH may be acquired by vehicle-to-everything (V2X) communication using the communication device 80, which is described later.

The map database 70 is a database of map information, and is stored in a storage device (for example, hard disk drive or flash memory) included in the vehicle VH. The map information includes the positions of road intersections and the like. The map database 70 may be stored in an external server capable of communication to and from the vehicle VH. In this case, the vehicle VH may use the communication device 80 to acquire the map information from the external server.

The communication device 80 performs V2X communication. Specifically, the communication device 80 performs vehicle-to-vehicle (V2V) communication to and from the own vehicle VH and other vehicles, vehicle-to-infrastructure (V2I) communication to and from the own vehicle VH and infrastructure, and vehicle-to-pedestrian (V2P) communication to and from the own vehicle VH and pedestrians. The communication device 80 can acquire information on the periphery of the own vehicle VH through the V2X communication. The information on the periphery includes, for example, the position of an intersection, the color of a traffic light, path information such as whether another vehicle is traveling straight or turning left or right, information on the position of a pedestrian, and the like. The communication device 80 transmits the acquired information on the periphery to the ECU 10 at a predetermined cycle.

### [Software Configuration]

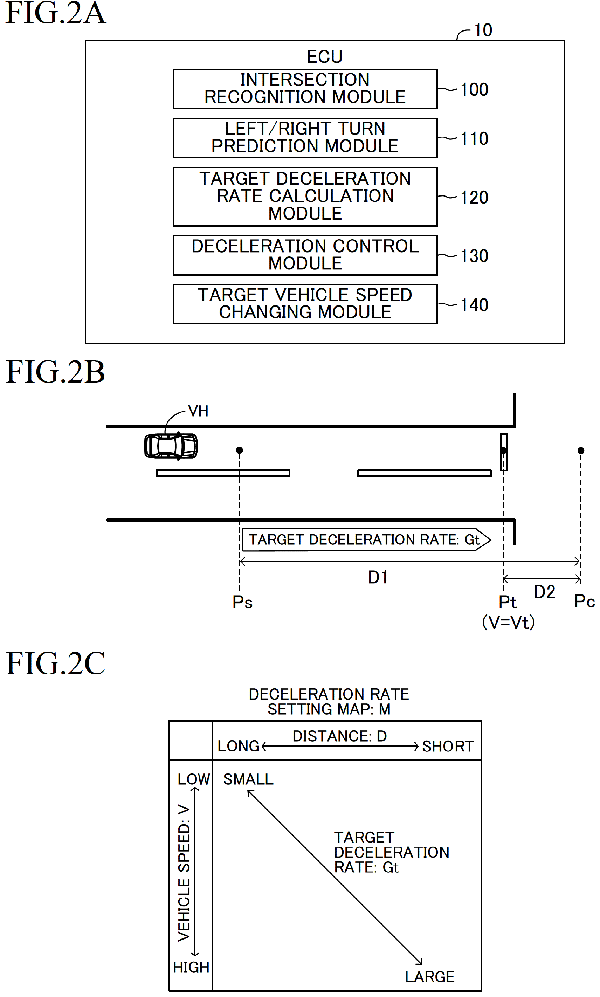

FIG. 2A is a schematic diagram for illustrating a software configuration of the ECU 10 in the at least one embodiment. As illustrated in FIG. 2A, the ECU 10 includes, as functional elements, an intersection recognition module 100, a left/right turn prediction module 110, a target deceleration rate calculation module 120, a deceleration control module 130, a target vehicle speed changing module 140, and the like. Each of those functional elements 100 to 140 is implemented by the CPU 11 of the ECU 10 reading out a program stored in the ROM 12 into the RAM 13 and executing the read-out program. A part of or all of the functional elements 100 to 140 may be provided in another ECU independent of the ECU 10 or in an information processing device of a facility (a management center or the like) communicable to and from the vehicle VH.

The intersection recognition module 100 recognizes the position of the intersection in front of the vehicle VH in the traveling direction (when there are a plurality of consecutive intersections in front, the closest intersection) based on the target object information acquired by the external sensor device 40. The camera sensor 42 of the external sensor device 40 acquires the traffic lights and road signs installed at the intersection before acquiring the stop line of the intersection. Therefore, the intersection recognition module 100 recognizes the intersection by acquiring traffic lights and road signs from image data of a region in front of the vehicle VH captured by the camera sensor 42. The traffic lights and road signs may be determined based on machine learning such as pattern matching. When the intersection recognition module 100 recognizes an intersection, the intersection recognition module 100 uses a publicly known method to recognize the position of the intersection (relative position with respect to the vehicle VH) by processing the image data captured by the camera sensor 42.

The intersection recognition module 100 may recognize the position of the intersection based on the target object information acquired by the radar sensor 41. Further, the intersection recognition module 100 may recognize the position of the intersection based on information received by the communication device 80 from an intelligent transport system (ITS), for example, through V2I communication. In addition, the intersection recognition module 100 may recognize the position of the intersection based on the current position of the vehicle VH acquired by the position information acquisition device 60 and the map database 70.

The left/right turn prediction module 110 predicts, when the intersection recognition module 100 recognizes an intersection in front of the vehicle VH, whether the vehicle VH is to turn left or right at the intersection. When the intersection recognition module 100 recognizes an intersection in front of the vehicle VH and then receives a blinking instruction signal indicating the left direction or the right direction from the direction indicator switch 50, the left/right turn prediction module 110 predicts that the vehicle VH is to turn left or right at the intersection. Further, when the left/right turn prediction module 110 predicts that the vehicle VH is to turn left or right at the intersection, the left/right turn prediction module 110 determines whether the vehicle VH is to turn left or to turn right toward the oncoming lane based on the detection result of the external sensor device 40.

In addition, after the intersection recognition module 100 recognizes an intersection in front of the vehicle VH, the left/right turn prediction module 110 may predict that the vehicle VH is to turn left or right at the intersection when the driver releases the accelerator pedal (accelerator OFF). Moreover, the left/right turn prediction module 110 may predict that the vehicle VH is to turn left or right at the intersection when it is acquired by the external sensor device 40 that the vehicle VH is traveling along a left-turn lane or a right-turn lane at the intersection. Further, the left/right turn prediction module 110 may predict that the vehicle VH is to turn left or right at the intersection when a route set by a navigation system is a route for turning left or right at the intersection.

As illustrated in FIG. 2B, the target deceleration rate calculation module 120 calculates a target deceleration rate Gt required in order to decelerate the vehicle VH to a predetermined reference target vehicle speed Vt suitable for turning left or right before the vehicle VH reaches a predetermined target position Pt on a near side of the intersection from a predetermined deceleration start position Ps. The deceleration start position Ps is not particularly limited, but a position closer to the vehicle VH side by a predetermined first distance D1 than a position Pc of the intersection recognized by the intersection recognition module 100 can be set as the deceleration start position Ps, for example. The first distance D1 is a distance which is at least longer than the distance from the position Pc of the intersection to the position of the stop line. The target position Pt is also not particularly limited, but in the at least one embodiment, the position of the stop line of the intersection at which the vehicle VH is about to turn left or right is set as the target position Pt. At the timing at which the intersection recognition module 100 recognizes the intersection, the camera sensor 42 of the external sensor device 40 has not acquired the stop line of the intersection. Therefore, the target deceleration rate calculation module 120 recognizes, for example, a position closer to the vehicle VH side by a predetermined second distance D2 (which is shorter than the first distance D1) than the position Pc of the intersection recognized by the intersection recognition module 100 as the position of the stop line.

The target deceleration rate calculation module 120 calculates the target deceleration rate Gt based on a deceleration rate setting map M (see FIG. 2C) stored in advance in the ROM 12, for example, of the ECU 10. The deceleration rate setting map M is a map which is referred to, for example, based on a distance D from the deceleration start position Ps to the target position Pt and the current vehicle speed V of the vehicle VH. The deceleration rate setting map M is set such that when the vehicle speed V is higher, and when distance D is shorter, the target deceleration rate Gt (absolute value) is larger. The target deceleration rate calculation module 120 calculates the target deceleration rate Gt by referring to the deceleration rate setting map M based on the distance D from the deceleration start position Ps to the target position Pt and the vehicle speed V detected by the vehicle speed sensor 31.

The deceleration control module 130 performs deceleration control of decelerating the vehicle VH at the target deceleration rate Gt calculated by the target deceleration rate calculation module 120 when the left/right turn prediction module 110 predicts that the vehicle VH is to turn left or right at the intersection. When the vehicle VH reaches the deceleration start position Ps, the deceleration control module 130 starts deceleration control of decelerating the vehicle VH at the target deceleration rate Gt. Whether or not the vehicle VH has reached the deceleration start position Ps may be recognized, for example, based on an amount of movement of the vehicle VH calculated by odometry from the detection results of the vehicle speed sensor 31 and the yaw rate sensor 35, or based on a movement trajectory of the vehicle VH acquired by the position information acquisition device 60.

The deceleration control module 130 performs deceleration control by controlling operation of the braking device 22 based on a deviation between the actual deceleration rate Ga of the vehicle VH and the target deceleration rate Gt. The deceleration control may use not only the braking force applied by the braking device 22, but also engine braking when the drive device 20 is an engine, and regenerative braking when the drive device 20 is an electric motor. The actual deceleration rate Ga of the vehicle VH may be acquired by differentiating the vehicle speed V detected by the vehicle speed sensor 31, or when the internal sensor device 30 includes an acceleration sensor, acquired by the acceleration sensor.

The deceleration control module 130 ends deceleration control when the vehicle VH reaches the target position Pt. Whether the vehicle VH has reached the target position Pt may be recognized, for example, based on the amount of movement of the vehicle VH calculated by odometry from the detection results of the vehicle speed sensor 31 and the yaw rate sensor 35, or based on the movement trajectory of the vehicle VH acquired by the position information acquisition device 60. In addition, the camera sensor 42 of the external sensor device 40 starts acquiring the stop line of the intersection during the process in which the vehicle VH approaches the target position Pt. When the camera sensor 42 starts acquiring the stop line of the intersection, the deceleration control module 130 switches the target position Pt to the position of the stop line recognized from the image data of the camera sensor 42.

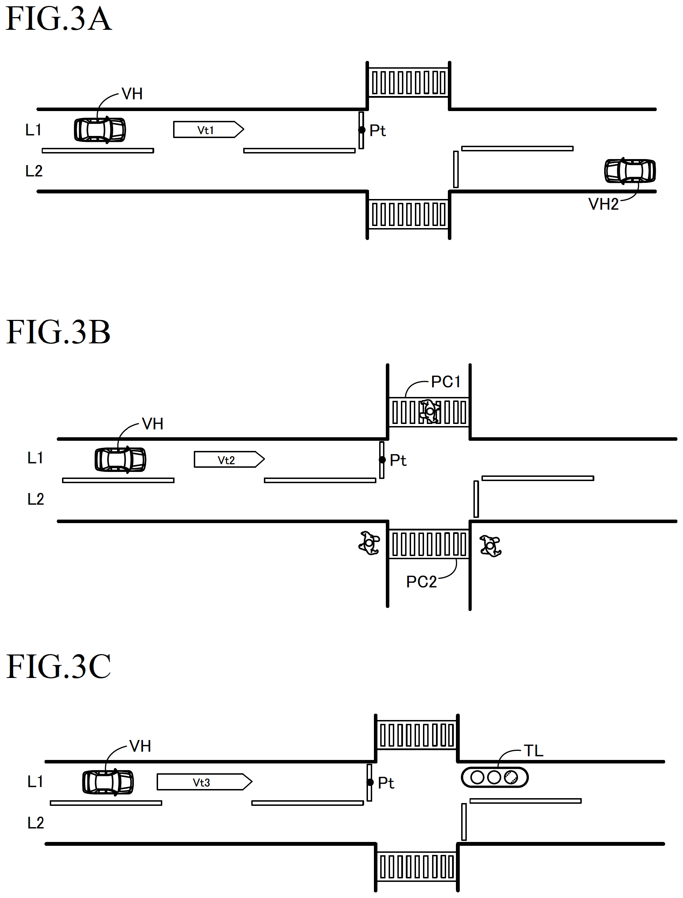

When deceleration control is performed based on a uniform reference target vehicle speed Vt, depending on peripheral situation such as the presence or absence of an oncoming vehicle or a pedestrian crossing the road, or the timing at which a traffic light color changes, the deceleration of the vehicle VH by the deceleration control may become too high or too low relative to the rate expected by the driver. The target vehicle speed changing module 140 optimizes deceleration support to match the rate expected by the driver by changing the target vehicle speed used for deceleration control from the reference target vehicle speed Vt in accordance with the peripheral situation. Description of a specific example of the processing of changing the target vehicle speed performed by the target vehicle speed changing module 140 is now given with reference to FIG. 3A to FIG. 3C. In addition, in FIG. 3A to FIG. 3C, there is illustrated a case in which a vehicle is driven on the left side of the road. In the case of driving on the right side of the road, the left and right directions are simply reversed, and thus description thereof is omitted here.

In FIG. 3A, a case in which there is an oncoming lane L2 in the direction in which the own vehicle VH is trying to turn right from an own lane L1, and there is another vehicle VH2 (oncoming vehicle) approaching the own vehicle VH in the oncoming lane L2 is illustrated. When deceleration control is performed based on a uniform reference target vehicle speed Vt in a situation in which the oncoming vehicle VH2 enters the intersection at the timing at which the own vehicle VH reaches the target position Pt, the driver of the own vehicle VH may feel that the deceleration is not sufficient. That is, there is a possibility that the deceleration of the vehicle VH by the deceleration control is too low relative to the rate expected by the driver, causing the driver to become anxious.

The target vehicle speed changing module 140 changes the target vehicle speed used for deceleration control to a first target vehicle speed Vt1 which is lower than the reference target vehicle speed Vt (Vt1<Vt) when it is predicted that the oncoming vehicle VH2 is to enter the intersection within a predetermined period of time before and after the timing at which the own vehicle VH is to reach the target position Pt. As a result, in a situation in which the oncoming vehicle VH2 is predicted to enter the intersection, the vehicle VH is decelerated at a rate which is close to the rate expected by the driver. That is, it becomes possible to effectively prevent the deceleration of the vehicle VH by the deceleration control from becoming too low relative to the rate expected by the driver. The timing at which the oncoming vehicle VH2 enters the intersection may be recognized based on information received by the communication device 80 from the oncoming vehicle VH2 through V2V communication, or based on the relative position or the relative speed of the oncoming vehicle VH2 acquired by the external sensor device 40.

The target vehicle speed changing module 140 does not change the target vehicle speed used for deceleration control when it is not predicted that the oncoming vehicle VH2 is to enter the intersection within a predetermined period of time before and after the timing at which the own vehicle VH is to reach the target position Pt, and when the oncoming vehicle VH2 is to turn right toward the own lane L1. That is, deceleration control based on the normal reference target vehicle speed Vt is performed. Whether the oncoming vehicle VH2 is to turn right toward the own lane L1 may be recognized based on information received by the communication device 80 from the oncoming vehicle VH2 through V2V communication, or based on a blinking state, for example, of the direction indicators of the oncoming vehicle VH2 acquired by the external sensor device 40.

In FIG. 3B, a case in which there are crosswalks PC1 and PC2 on an own path into which the own vehicle VH is about to turn left or right at the intersection, and there is a pedestrian (including a bicycle) who is traveling through or about to travel through the crosswalk PC1 or PC2 is illustrated. When deceleration control is performed based on a uniform reference target vehicle speed Vt in a situation in which the pedestrian is traveling through or about to travel through the crosswalk PC1 or PC2 at the timing at which the own vehicle VH reaches the target position Pt, the driver of the own vehicle VH may feel that the deceleration is not sufficient. That is, there is a possibility that the deceleration of the vehicle VH by the deceleration control is too low relative to the rate expected by the driver, causing the driver to become anxious.

The target vehicle speed changing module 140 changes the target vehicle speed used for deceleration control to a second target vehicle speed Vt2 which is lower than the reference target vehicle speed Vt (Vt2<Vt) when it is predicted that a pedestrian (including a mobile object such as a bicycle) is traveling through or about to travel through the crosswalk PC1 or PC2 within a predetermined period of time before and after the timing at which the own vehicle VH is to reach the target position Pt. As a result, in a situation in which it is predicted that a pedestrian is traveling through or about to travel through the crosswalk PC1 or PC2, the vehicle VH is decelerated at a rate which is close to the rate expected by the driver. That is, it becomes possible to effectively prevent the deceleration of the vehicle VH by the deceleration control from becoming too low relative to the rate expected by the driver. The second target vehicle speed Vt2 may be the same vehicle speed as the first target vehicle speed Vt1, or may be a different vehicle speed. Whether or not a pedestrian is traveling through or about to travel through the crosswalk PC1 or PC2 may be recognized based on information received by the communication device 80 through V2P communication from a mobile terminal, for example, carried by the pedestrian, or based on the relative position or the relative speed of the pedestrian acquired by the external sensor device 40.

The target vehicle speed changing module 140 does not change the target vehicle speed used for deceleration control when it is not predicted that a pedestrian is traveling through or about to travel through the crosswalk PC1 or PC2 within a predetermined period of time before and after the timing at which the own vehicle VH is to reach the target position Pt. That is, deceleration control based on the normal reference target vehicle speed Vt is performed. In addition, the distance from the target position Pt to the crosswalk PC2 on the oncoming lane L2 side is longer than the distance from the target position Pt to the crosswalk PC1 on the own lane L1 side. Therefore, when there is a crosswalk PC2 on the oncoming lane L2 side on the path that the own vehicle VH is about to travel along, that is, when the own vehicle VH is turning right, the target vehicle speed changing module 140 may set the predetermined period of time used to determine whether or not there is a pedestrian to a wider range.

In FIG. 3C, a case in which, at the timing at which the own vehicle VH enters the intersection, the illuminated color of a traffic light TL installed at the intersection changes to an illuminated color (for example, red) which prohibits the own vehicle VH from entering the intersection is illustrated. When deceleration control is performed based on a uniform reference target vehicle speed Vt in a situation in which the illuminated color of the traffic light TL changes to red at the timing at which the own vehicle VH reaches the target position Pt, the deceleration of the vehicle VH by the deceleration control may be more than the rate expected by the driver. That is, when the own vehicle VH is unable to travel through the intersection due to activation of deceleration control, the driver is inconvenienced.

The target vehicle speed changing module 140 changes the target vehicle speed used for deceleration control to a third target vehicle speed Vt3 which is higher than the reference target vehicle speed Vt (Vt3<Vt) when it is predicted that the illuminated color of the traffic light TL is to change to an illuminated color (for example, red) which prohibits the own vehicle VH from entering the intersection within a predetermined period of time before and after the timing at which the own vehicle VH is to reach the target position Pt. As a result, in a situation in which the illuminated color of the traffic light TL is predicted to change to an illuminated color which prohibits the own vehicle VH from entering the intersection, the vehicle VH is decelerated at a rate which is close to the rate expected by the driver. That is, it becomes possible to effectively prevent the deceleration of the vehicle VH by the deceleration control from becoming too high relative to the rate expected by the driver. Whether or not the illuminated color of the traffic light TL is to change to an illuminated color which prohibits the own vehicle VH from entering the intersection may be predicted from, for example, a change in the color of a pedestrian traffic light acquired by the external sensor device 40 or the illumination of an arrow signal which permits a right turn, or may be recognized based on information received by the communication device 80 from ITS, for example, through V2I communication.

The target vehicle speed changing module 140 does not change the target vehicle speed used for deceleration control when it is not predicted that the illuminated color of the traffic light TL is to change to an illuminated color which prohibits the own vehicle VH from entering the intersection within a predetermined period of time before and after the timing at which the own vehicle VH is to reach the target position Pt. That is, deceleration control based on the normal reference target vehicle speed Vt is performed. In addition, when it is predicted that the illuminated color of the traffic light TL is already an illuminated color which prohibits the own vehicle VH from entering the intersection at the timing at which the own vehicle VH is to reach the target position Pt, stop control of causing the own vehicle VH is stop at the target position Pt may be performed.

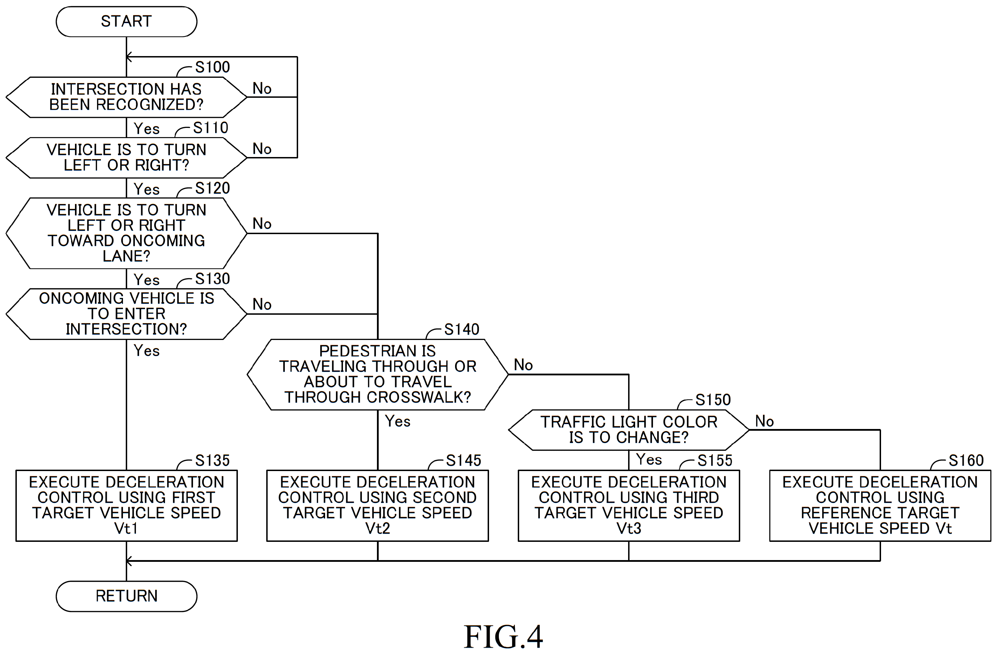

Next, a processing routine of deceleration support by the CPU 11 of the ECU 10 is described with reference to FIG. 4. The routine is started when the vehicle VH travels.

In Step S100, the ECU 10 determines whether or not an intersection has been recognized in front of the own vehicle VH. When an intersection has been recognized (Yes), the ECU 10 advances the process to Step S110. Meanwhile, when an intersection has not been recognized (No), the ECU 10 returns the process to the determination processing of Step S100.

In Step S110, the ECU 10 predicts whether or not the vehicle VH is to turn left or right at the intersection. When it is predicted that the vehicle VH is to turn left or right at the intersection (Yes), the ECU 10 advances the process to Step S120. Meanwhile, when it is not predicted that the vehicle VH is to turn left or right at the intersection (No), the ECU 10 returns the process to the determination processing of Step S100.

In Step S120, the ECU 10 determines whether or not the own vehicle VH is to turn right (or turn left when driving on the right side of the road) toward the oncoming lane L2. When the own vehicle VH is to turn right toward the oncoming lane L2 (Yes), the ECU 10 advances the process to Step S130. Meanwhile, when the own vehicle VH is not to turn right toward the oncoming lane L2 (No), the ECU 10 advances the process to Step S140.

In Step S130, the ECU 10 determines whether or not the oncoming vehicle VH2 is predicted to enter the intersection within a predetermined period of time before and after the timing at which the own vehicle VH is to reach the target position Pt. When it is predicted that the oncoming vehicle VH2 is to enter the intersection (Yes), the ECU 10 advances the process to Step S135. Meanwhile, when it is not predicted that the oncoming vehicle VH2 is to enter the intersection (No), the ECU 10 advances the process to Step S140.

In Step S135, the ECU 10 executes deceleration control by changing the target vehicle speed to the first target vehicle speed Vt1, which is lower than the reference target vehicle speed Vt, and then returns from this routine.

When the process advances from Step S120 or Step S130 to Step S140, the ECU 10 determines whether or not it is predicted that a pedestrian is traveling through or about to travel through the crosswalk PC1 or PC2 within a predetermined period of time before and after the timing at which the own vehicle VH is to reach the target position Pt. When it is predicted that a pedestrian is traveling through or about to travel through the crosswalk PC1 or PC2 (Yes), the ECU 10 advances the process to Step S145. Meanwhile, when it is not predicted that a pedestrian is traveling through or about to travel through the crosswalk PC1 or PC2 (No), the ECU 10 advances the process to Step S150. In addition, when the own vehicle VH is turning right toward the oncoming lane L2 (turning left when driving on the right side of the road), the ECU 10 may set the predetermined period of time used to determine whether or not there is a pedestrian in Step S140 to a wider range.

In Step S145, the ECU 10 executes deceleration control by changing the target vehicle speed to the second target vehicle speed Vt2, which is lower than the reference target vehicle speed Vt, and then returns from this routine.

When the process advances from Step S140 to Step S150, the ECU 10 determines whether or not it is predicted that the illuminated color of the traffic light TL is to change to an illuminated color (red) which prohibits the own vehicle VH from entering the intersection within a predetermined period of time before and after the timing at which the own vehicle VH is to reach the target position Pt. When it is predicted that the illuminated color of the traffic light TL is to change to an illuminated color which prohibits entry (Yes), the ECU 10 advances the process to Step S155. Meanwhile, when it is not predicted that the illuminated color of the traffic light TL is to change to an illuminated color which prohibits entry (No), the ECU 10 advances the process to Step S160.

In Step S155, the ECU 10 executes deceleration control by changing the target vehicle speed to the third target vehicle speed Vt3, which is higher than the reference target vehicle speed Vt, and then returns from this routine. Meanwhile, when the process advances from Step S150 to Step S160, the ECU 10 executes deceleration control through use of the normal reference target vehicle speed Vt without changing the target vehicle speed, and then returns from this routine. In addition, in the determination processing of Step S150, when it is predicted that the illuminated color of the traffic light TL is already an illuminated color which prohibits the own vehicle VH from entering the intersection at the timing at which the own vehicle VH is to reach the target position Pt, stop control of causing the own vehicle VH is stop at the target position Pt may be performed.

The driving support device according to the at least one embodiment has been described above, but the present disclosure is not limited to the at least one embodiment described above, and various changes are possible within the range not departing from the object of the present disclosure.

### [Modification Example 1]

For example, in the at least one embodiment described above, in Step S135, Step S145, and Step S155 illustrated in FIG. 4, processing of changing the target vehicle speed from the reference target vehicle speed Vt (target vehicle speed change processing) is performed. However, in addition to or in place of the target vehicle speed change processing, start timing change processing of changing the deceleration start position Ps (that is, changing the start timing of deceleration control) may be performed.

Specifically, in Step S135 and Step S145, the start timing is advanced by bringing the deceleration start position Ps closer in the direction in front of the own vehicle VH. When the start timing of deceleration control is advanced, the time required for the own vehicle VH to reach the target position Pt is increased, and it becomes possible to effectively prevent the deceleration of the own vehicle VH by deceleration control from being too low relative to the rate expected by the driver. Further, in Step S155, the start timing is delayed by moving the deceleration start position Ps further away from the own vehicle VH. When the start timing of deceleration control is delayed, the time required for the own vehicle VH to reach the target position Pt is shortened, and it becomes possible to effectively prevent the own vehicle VH from being unable to travel through the intersection due to activation of deceleration control.

### [Modification Example 2]

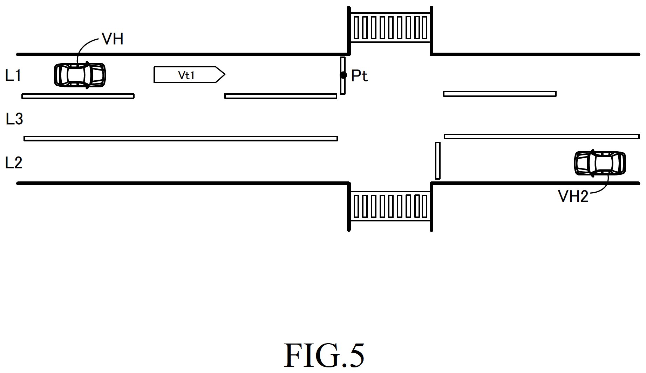

FIG. 5 is a schematic diagram for illustrating Modification Example 2 of the present disclosure. In Modification Example 2, description of a case in which a straight-ahead lane L3 along which priority vehicles such as buses (including streetcars and the like) can travel is present between the own lane L1 and the oncoming lane L2 is given. In such a case, target vehicle speed change processing and/or start timing change processing may be performed based on information on another vehicle traveling in the straight-ahead lane L3. Specifically, when the own vehicle VH is about to turn right toward the oncoming lane L2, in a case in which it is predicted that a following vehicle traveling along the straight-ahead lane L3 is to enter the intersection, the target vehicle speed may be changed to the first target vehicle speed Vt1, or the start timing may be advanced. In this way, it becomes possible to effectively prevent the deceleration of the own vehicle VH by the deceleration control from becoming too low relative to the rate expected by the driver.

## Claims

1. A driving support device, comprising:
an intersection recognition module (100) configured to recognize an intersection in front of a vehicle (VH) in a traveling direction;
a left/right turn prediction module (110) configured to predict whether the vehicle (VH) is to turn left or right at the intersection recognized by the intersection recognition module (100);
a deceleration control module (120, 130, 140) configured to perform, when the left/right turn prediction module (110) predicts that the vehicle (VH) is to turn left or right at the intersection, deceleration control of decelerating the vehicle (VH) to a predetermined target vehicle speed (Vt) before the vehicle (VH) reaches a predetermined target position (Pt); and
an external information acquisition module (40, 60, 70, 80) configured to acquire information on a traffic light color of the intersection, as well as information on an oncoming vehicle (VH2) and/or information on a pedestrian,
the deceleration control module (130) being configured to set the predetermined target vehicle speed (Vt) and/or a start timing for starting the deceleration control based on the information on the traffic light color of the intersection, when it is not predicted, based on the information acquired by the external information acquisition module (40, 60, 70, 80), that an oncoming vehicle (VH2) and/or pedestrian will enter the intersection.

2. The driving support device according to claim 1, wherein the deceleration control module (130) is configured to set the predetermined target vehicle speed (Vt) and/or the start timing for starting the deceleration control based on the information on the oncoming vehicle (VH2) and/or the information on the pedestrian, when it is predicted, based on the information acquired by the external information acquisition module (40, 60, 70, 80), that the oncoming vehicle (VH2) and/or the pedestrian will enter the intersection.

3. The driving support device according to claim 1 or 2, wherein the deceleration control module (130) is configured to execute target vehicle speed change processing for increasing the predetermined target vehicle speed (Vt) and/or start timing change processing for delaying the start timing, when it is not predicted, based on the information acquired by the external information acquisition module, that the oncoming vehicle (VH2) and/or the pedestrian will enter the intersection, as compared with a case in which it is predicted that the oncoming vehicle (VH2) and/or the pedestrian will enter the intersection.

4. The driving support device according to any one of claims 1 to 3, wherein the deceleration control module (120, 130, 140) is configured to execute target vehicle speed change processing of increasing the predetermined target vehicle speed (Vt) and/or start timing change processing of delaying the start timing when, based on the information acquired by the external information acquisition module (40, 60, 70, 80), it is not predicted that the oncoming vehicle and/or the pedestrian will enter the intersection, and it is predicted that the traffic light color is to change to a color which prohibits the vehicle (VH) from entering the intersection within a predetermined period of time before and after a timing at which the vehicle (VH) is to reach the predetermined target position (Pt).

5. The driving support device according to any one of claims 1 to 4, wherein the deceleration control module (130) is configured to execute stop control for stopping the vehicle (VH) at the predetermined target position (Pt), when it is not predicted, based on the information acquired by the external information acquisition module (40, 60, 70, 80), that the oncoming vehicle (VH2) and/or the pedestrian will enter the intersection, and it is predicted that the traffic light color will change to a color prohibiting the vehicle from entering the intersection at the timing at which the vehicle is to reach the predetermined target position.
